# EUROPEAN PATENT APPLICATION

(11) **EP 4 746 479 A1**
(43) Date of publication of application: **20.05.2026**
(21) Application number: 24853259.0
(22) Date of filing: 07.05.2024
(51) Int. Cl.: H04W 12/06, H04L 41/04

(54) **CROSS-NODE DATA TRANSMISSION METHOD AND RELATED DEVICE**

(30) Priority: 11.08.2023 CN 202311018473
(71) Applicant: Huawei Technologies Co., Ltd., Shenzhen, Guangdong 518129 (CN)
(72) Inventor: CHENG, Jianming, Shenzhen, Guangdong 518129 (CN); JIANG, Weiyu, Shenzhen, Guangdong 518129 (CN); LI, Yinghui, Shenzhen, Guangdong 518129 (CN); LI, Jieyu, Shenzhen, Guangdong 518129 (CN); MA, Tianjun, Shenzhen, Guangdong 518129 (CN); YANG, Fei, Shenzhen, Guangdong 518129 (CN); SONG, Xinyi, Shenzhen, Guangdong 518129 (CN)
(74) Representative: Pfenning, Meinig & Partner mbB
(86) International application number: PCT/CN2024/091448
(87) International publication number: WO 2025/035843

(57) **Abstract**

Embodiments of this application provide a cross-node data transmission method and a related apparatus, used in a relay node in a decentralized network. The method includes: After completing neighbor discovery with an adjacent node, the relay node receives a route flooding message sent by the adjacent node, and performs authentication on the route flooding message based on unidirectional node authentication information in the route flooding message. If an authentication result is that the route flooding message is sent by the adjacent node, the relay node establishes a correspondence between the adjacent node and challenge information. The relay node subsequently receives a data packet sent by the adjacent node, and verifies the data packet based on challenge information corresponding to the node. If the data packet is sent by the adjacent node, the relay node updates the data packet, to obtain a forwarding packet. The relay node sends the forwarding packet to a next-hop node. In the foregoing process, mutual authentication does not need to be performed between two adjacent nodes, reducing the number of mutual authentications. The relay node that forwards the data packet does not need to decrypt or encrypt forwarded data, thereby reducing energy consumption of the node and transmission latency.

## Description

This application claims priority to Chinese Patent Application No. 202311018473.X, filed with the China National Intellectual Property Administration on August 11, 2023 and entitled "CROSS-NODE DATA TRANSMISSION METHOD AND RELATED APPARATUS", which is incorporated herein by reference in its entirety.

### TECHNICAL FIELD

This application relates to the field of cloud computing technologies, and in particular, to a cross-node data transmission method and a related apparatus.

### BACKGROUND

In a decentralized network (for example, a self-organizing network), the interconnection among devices extends a connection range of the devices is expanded, and reduces network deployment costs. For example, a smart screen in a network needs to communicate with a smartwatch, but the two cannot be directly reach each other. The smart screen is connected to a smartphone via a mobile hotspot (for example, Wi-Fi), while the smartphone is connected to the smartwatch via Bluetooth. Therefore, data transmission between the smartwatch and the smart screen can be implemented through forwarding by the smartphone, enabling communication between the smart screen and the smartwatch.

However, a device that performs a data forwarding function in the network is typically not a router or a switch. For example, if the smartphone serves as a forwarding device, an original network security model of the smartphone is disrupted, brings security risks. To ensure the security of the forwarding device, before the smartphone serving as the forwarding device forwards data, the smartphone needs to authenticate nodes at a link source and a link destination, and forward data only of a node that has been authenticated. However, the following problems occur in the authentication process. Because data forwarding is typically transmission across relay nodes, each relay node needs to authenticate a data sending node before forwarding. In this case, multiple authentication processes introduces communication latency. In addition, when the smartphone serving as a forwarding node needs to decrypt received data by using a key corresponding to a sender, and then encrypt the data by using a key corresponding to a receiver. These encryption and decryption operations increase energy consumption of the smartphone and data transmission latency.

### SUMMARY

This application provides a cross-node data transmission method and a related apparatus. During networking, adjacent nodes send route flooding messages to each other, and it is determined, by using security flooding information written in the route flooding message, that the route flooding message is sent by an adjacent node. After the networking is completed, when a data packet sent by the adjacent node is received, challenge response information in the data packet is verified based on challenge information, so that it is determined that the data packet is sent by the adjacent node. In this way, mutual identity authentication between the adjacent nodes is avoided, and a relay node does not need to decrypt or encrypt data packets, thereby reducing energy consumption of a node and transmission latency.

To achieve the foregoing objective, this application uses the following technical solutions.

According to a first aspect, a cross-node data transmission method is provided. The method is applied to a relay node in a decentralized network. The decentralized network includes at least three nodes, and the at least three nodes include the relay node and at least two adjacent nodes of the relay node. The method includes: After the relay node completes neighbor discovery with an adjacent node, the relay node receives a route flooding message sent by the adjacent node, where the route flooding message carries unidirectional node authentication information and challenge information. The relay node performs authentication on the route flooding message based on the unidirectional node authentication information, to obtain an authentication result. If the authentication result is that the route flooding message is sent by the adjacent node, the relay node establishes a correspondence between the adjacent node and the challenge information. The relay node receives a data packet sent by the adjacent node, where the data packet carries challenge response information corresponding to the adjacent node. The relay node determines, based on the correspondence, challenge information corresponding to the adjacent node. The relay node verifies challenge response information based on the challenge information, to obtain a verification result. If the verification result is that it is determined that the data packet is sent by the adjacent node, the relay node obtains challenge response information corresponding to the relay node. The relay node updates the data packet based on the challenge response information corresponding to the relay node, to obtain a forwarding packet, where the forwarding packet carries the challenge response information corresponding to the relay node. The relay node sends the forwarding packet to a next-hop node.

In this way, after neighbor discovery between adjacent nodes is completed, the adjacent nodes perform networking by sending route flooding messages to each other, where the route flooding message carries unidirectional authentication information and challenge information. A receiving node of the route flooding message performs identity authentication on a sending node of the route flooding message by using the unidirectional authentication information, to authenticate whether the route flooding message is sent by an adjacent node. If it is determined, based on an authentication result, that the route flooding message is sent by the adjacent node, the relay node establishes a correspondence between the sending node and the challenge information. After networking is completed, the adjacent node sends the data packet to a destination node via the relay node, where the data packet carries challenge response information corresponding to the adjacent node. The relay node receives the data packet sent by the adjacent node, and the relay node verifies the challenge response message based on the challenge information. If a verification result is that the forwarding packet is sent by the adjacent node, the relay node updates the data packet to obtain a forwarding packet, and then sends the forwarding packet to a next-hop node. In the foregoing data transmission process, the relay node does not need to perform mutual authentication with the adjacent node, reducing the number of mutual authentications. In a process in which the relay node forwards the data packet, the relay node does not need to encrypt or decrypt the forwarded data packet, so that energy consumption of the relay node is reduced.

In some embodiments of the first aspect, the unidirectional authentication information includes signature information corresponding to the route flooding message. Performing identity authentication on the route flooding message based on the unidirectional node authentication information, to obtain the authentication result includes: obtaining a public key of the adjacent node; and verifying the signature information based on the public key, to obtain the authentication result.

In this way, because the public key is unique, the relay node performs identity authentication on the adjacent node by using the public key, to determine an identity of the adjacent node. Then, the relay node verifies, based on the public key, the signature information in the route flooding message corresponding to the adjacent node, to verify that the route flooding message is sent by the adjacent node instead of being forged by another node. That is, message authentication is performed on the route flooding message.

In some embodiments of the first aspect, the challenge information includes a challenge random value, and the challenge response message includes a response random value. Verifying the challenge response information based on the challenge information, to obtain the verification result includes: if the challenge random value is equal to the response random value, determining that the data packet is sent by the adjacent node; or if the challenge random value is not equal to the response random value, determining that the data packet is not sent by the adjacent node.

In this way, a challenge random number in the challenge information is compared with a response random number in the challenge response information, to detect whether the data packet is sent by the adjacent node, so that the data packet is verified.

In some embodiments of the first aspect, the challenge information includes a key agreement parameter corresponding to the adjacent node, and the challenge response information includes a response information verification code. Verifying the challenge response information based on the challenge information, to obtain the verification result includes: determining a challenge information verification code based on the key agreement parameter; and if the challenge information verification code is equal to the response information verification code, determining that the data packet is sent by the adjacent node; or if the challenge information verification code is not equal to the response information verification code, determining that the data packet is not sent by the adjacent node.

In this way, the challenge information verification code in the challenge information is compared with the response information verification code in the challenge response information, to detect whether the data packet is sent by the adjacent node, so that the data packet is verified.

In some embodiments of the first aspect, the challenge information includes a challenge random value and a key agreement parameter corresponding to the adjacent node, and the challenge response message includes a response random value and a response information verification code. Verifying the challenge response information based on the challenge information, to obtain the verification result includes: determining a challenge information verification code based on the key agreement parameter; and if the challenge random value is equal to the response random value, and the challenge information verification code is equal to the response information verification code, determining that the data packet is sent by the adjacent node; or if the challenge random value is not equal to the response random value, and/or the challenge information verification code is not equal to the response information verification code, determining that the data packet is not sent by the adjacent node.

In this way, the challenge information verification code in the challenge information is compared with the response information verification code in the challenge response information, and the challenge random number is compared with the response random number, to detect whether the data packet is sent by the adjacent node, so that the data packet is verified.

In some embodiments of the first aspect, the challenge information further includes validity time of the challenge random value. Before verifying the challenge response information based on the challenge information, the method further includes: if it is determined, based on the validity time, that the challenge random value is within the validity time, verifying the challenge response information based on the challenge information.

In this way, a validity period of the challenge random number is limited by the validity time, to improve security of the challenge random number.

In some embodiments of the first aspect, the route flooding message further carries a timestamp, and the timestamp indicates time corresponding to the route flooding message.

In this way, due to a non-repetition feature of the timestamp, a replay attack is prevented by adding the timestamp.

In some embodiments of the first aspect, the data packet carries mutual authentication information, and the adjacent node performs mutual authentication with a destination node of the data packet by using the mutual authentication information.

In this way, cross-node authentication is implemented based on the mutual authentication information carried in the data packet, to ensure security of cross-node data transmission.

According to a second aspect, a cross-node data transmission method is provided. The method is applied to a sending node in a decentralized network. The decentralized network includes at least three nodes. The method includes: After completing neighbor discovery with an adjacent node, the sending node sends a route flooding message to the adjacent node, where the route flooding message carries unidirectional node authentication information and challenge information, for the adjacent node to perform, based on the unidirectional node authentication information, authentication on the route flooding message sent by the adjacent node, to obtain an authentication result. When the authentication result is that the route flooding message is sent by the sending node, the adjacent node establishes a correspondence between the sending node and the challenge information. The sending node sends a data packet to the adjacent node, where the data packet carries challenge response information corresponding to the sending node, the sending node is a source node of the data packet, and the adjacent node is not a destination node of the data packet, and the adjacent node determines, based on the correspondence, challenge information corresponding to the sending node. The adjacent node verifies the challenge response information based on the challenge information, to obtain a verification result. If the verification result is that the adjacent node determines that the data packet is sent by the sending node, the adjacent node obtains challenge response information corresponding to a relay node. The adjacent node updates the data packet based on the challenge response information corresponding to the sending node, to obtain a forwarding packet, where the forwarding packet carries the challenge response information corresponding to the adjacent node. The adjacent node sends the forwarding packet to a next-hop node.

In some embodiments of the second aspect, the unidirectional authentication information includes signature information corresponding to the route flooding message.

In some embodiments of the second aspect, the challenge information includes a challenge random value, and the challenge response message includes at least one of a response random value and a key agreement parameter.

In some embodiments of the second aspect, the data packet further carries mutual authentication information, and the sending node performs mutual authentication with the destination node of the data packet by using the mutual authentication information.

According to a third aspect, a cross-node data transmission method is provided. The method is applied to a receiving node in a decentralized network. The decentralized network includes at least three nodes. The method includes: After completing neighbor discovery with an adjacent node, the receiving node receives a route flooding message sent by the adjacent node, where the route flooding message carries unidirectional node authentication information, and challenge information. The receiving node performs authentication on the route flooding message based on the unidirectional node authentication information, to obtain an authentication result. If the authentication result is that the route flooding message is sent by the adjacent node, the receiving node establishes a correspondence between the adjacent node and the challenge information. The receiving node receives a forwarding packet sent by the adjacent node, where the forwarding packet carries challenge response information corresponding to the adjacent node, the receiving node is a destination node of the forwarding packet, and the adjacent node is not a source node of the forwarding packet. The receiving node determines, based on the correspondence, challenge information corresponding to the adjacent node. The receiving node verifies the challenge response information based on the challenge information, to obtain a verification result. If the verification result is that the challenge information matches the challenge response information, and it is determined that the forwarding packet is sent by the adjacent node, the receiving node parses payload information of the forwarding packet.

In some embodiments of the third aspect, the unidirectional authentication information includes signature information corresponding to the route flooding message. That the receiving node performs identity authentication on the route flooding message based on the unidirectional node authentication information, to obtain the authentication result includes: The receiving node obtains a public key of the adjacent node. The receiving node verifies the signature information based on the public key, to obtain the authentication result.

In some embodiments of the third aspect, the challenge information includes a challenge random value, and the challenge response message includes a response random value. Verifying the challenge response information based on the challenge information, to obtain the verification result includes: if the challenge random value is equal to the response random value, and the challenge information matches the challenge response information, determining that the data packet is sent by the adjacent node; or if the challenge random value is not equal to the response random value, and the challenge information does not match the challenge response information, determining that the data packet is not sent by the adjacent node.

In some embodiments of the third aspect, the challenge information includes a key agreement parameter corresponding to the adjacent node, and the challenge response information includes a response information verification code. Verifying the challenge response information based on the challenge information, to obtain the verification result includes: determining a challenge information verification code based on the key agreement parameter; and if the challenge information verification code is equal to the response information verification code, determining that the data packet is sent by the adjacent node; or if the challenge information verification code is not equal to the response information verification code, determining that the data packet is not sent by the adjacent node.

In some embodiments of the third aspect, the challenge information includes a challenge random value and a key agreement parameter corresponding to the adjacent node, and the challenge response message includes a response random value and a response information verification code. Verifying the challenge response information based on the challenge information, to obtain the verification result includes: determining a challenge information verification code based on the key agreement parameter; and if the challenge random value is equal to the response random value, and the challenge information verification code is equal to the response information verification code, determining that the data packet is sent by the adjacent node; or if the challenge random value is not equal to the response random value, and/or the challenge information verification code is not equal to the response information verification code, determining that the data packet is not sent by the adjacent node.

In some embodiments of the third aspect, the challenge information further includes validity time of the challenge random value. Before verifying the challenge response information based on the challenge information, the method further includes: if it is determined, based on the validity time, that the challenge random value is within the validity time, verifying the challenge response information based on the challenge information.

In some embodiments of the third aspect, the route flooding message further carries a timestamp, and the timestamp indicates time corresponding to the route flooding message.

In some embodiments of the third aspect, the data packet carries mutual authentication information, and the receiving node performs mutual authentication with a source node of the data packet by using the mutual authentication information.

According to a fourth aspect, a cloud cross-node data transmission method is provided. The method is applied to a decentralized network. The decentralized network includes at least three nodes. The method includes: After the at least three nodes complete neighbor discovery, adjacent nodes in the at least three nodes send route flooding messages to each other, where the route flooding message carries unidirectional node authentication information and challenge information. The at least three nodes perform, based on the unidirectional node authentication information, authentication on the route flooding messages sent by the adjacent nodes, to obtain an authentication node. If the authentication result is that the route flooding messages are sent by the adjacent nodes, the at least three nodes establish a correspondence between the adjacent nodes and the challenge information. A sending node in the at least three nodes sends a data packet to a relay node, where a source node of the data packet is the sending node, and the relay node is an adjacent node of the sending node and is not a destination node of the data packet. The relay node receives the data packet sent by the sending node, where the data packet carries challenge response information corresponding to the sending node. The relay node determines, based on the correspondence, challenge information corresponding to the sending node. The relay node verifies the challenge response information based on the challenge information, to obtain a verification result. If the verification result is that the relay node determines that the data packet is sent by the sending node, the relay node obtains challenge response information corresponding to the relay node. The relay node updates the data packet based on the challenge response information corresponding to the relay node, to obtain a forwarding packet, where the forwarding packet carries the challenge response information corresponding to the relay node. The relay node sends the forwarding packet to a next-hop node.

In some embodiments of the fourth aspect, the unidirectional authentication information includes signature information corresponding to the route flooding message. That the relay node performs identity authentication on the route flooding message based on the unidirectional node authentication information, to obtain the authentication result includes: The relay node obtains a public key of the adjacent node. The relay node verifies the signature information based on the public key, to obtain the authentication result.

In some embodiments of the fourth aspect, the challenge information includes a challenge random value, and the challenge response message includes a response random value. That the relay node verifies the challenge response information based on the challenge information, to obtain the verification result includes: If the challenge random value is equal to the response random value, the relay node determines that the data packet is sent by the adjacent node. If the challenge random value is not equal to the response random value, the relay node determines that the data packet is not sent by the adjacent node.

In some embodiments of the fourth aspect, the challenge information includes a key agreement parameter corresponding to the adjacent node, and the challenge response information includes a response information verification code. That the relay node verifies the challenge response information based on the challenge information, to obtain the verification result includes: The relay node determines a challenge information verification code based on the key agreement parameter. If the challenge information verification code is equal to the response information verification code, the relay node determines that the data packet is sent by the adjacent node. If the challenge information verification code is not equal to the response information verification code, the relay node determines that the data packet is not sent by the adjacent node.

In some embodiments of the fourth aspect, the challenge information includes a challenge random value and a key agreement parameter corresponding to the adjacent node, and the challenge response message includes a response random value and a response information verification code. That the relay node verifies the challenge response information based on the challenge information, to obtain the verification result includes: The relay node determines a challenge information verification code based on the key agreement parameter. If the challenge random value is equal to the response random value, and the challenge information verification code is equal to the response information verification code, the relay node determines that the data packet is sent by the adjacent node; or if the challenge random value is not equal to the response random value, and/or the challenge information verification code is not equal to the response information verification code, the relay node determines that the data packet is not sent by the adjacent node.

In some embodiments of the fourth aspect, the challenge information further includes validity time of the challenge random value. Before that the relay node verifies the challenge response information based on the challenge information, the method further includes: If it is determined, based on the validity time, that the challenge random value is within the validity time, the relay node verifies the challenge response information based on the challenge information.

In some embodiments of the fourth aspect, the route flooding message further carries a timestamp, and the timestamp indicates time corresponding to the route flooding message.

In some embodiments of the fourth aspect, the data packet carries mutual authentication information, and the sending node performs mutual authentication with the destination node of the data packet by using the mutual authentication information.

According to a fifth aspect, a node is provided. The memory includes a memory, where the memory includes computer-readable instructions; and
a processor communicating with the memory, where the processor is configured to execute the computer-readable instructions, to enable the node to perform the cross-node data transmission method according to any one of the first aspect, the second aspect, or the third aspect.

According to a sixth aspect, a computer-readable storage medium is provided. The computer-readable storage medium includes a program or instructions. When the program or the instructions are executed by a processor, the cross-node data transmission method according to any one of the first aspect, the second aspect, or the third aspect is implemented.

For beneficial effects achieved by each possible implementation of the cross-node data transmission method provided in the second aspect, the cross-node data transmission method provided in the third aspect, the cross-node data transmission method provided in the fourth aspect, the node provided in the fifth aspect, and the computer-readable storage medium provided in the sixth aspect that are of embodiments of this application, refer to the descriptions in the possible implementations of the first aspect. Details are not described herein again.

### BRIEF DESCRIPTION OF DRAWINGS

FIG. 1 is a diagram of a heterogeneous network;
FIG. 2 is a diagram of end-to-end cross-hop authentication in the heterogeneous network shown in FIG. 1;
FIG. 3 is a diagram of a scenario of a cross-node data transmission method according to an embodiment of this application;
FIG. 4 is a schematic flowchart of a cross-node data transmission method according to an embodiment of this application;
FIG. 5 is a schematic flowchart of another cross-node data transmission method according to an embodiment of this application;
FIG. 6 is a diagram of a structure of a route flooding message according to an embodiment of this application;
FIG. 7 is a schematic flowchart of another cross-node data transmission method according to an embodiment of this application; and
FIG. 8 is a diagram of a structure of a node according to an embodiment of this application.

### DESCRIPTION OF EMBODIMENTS

The following describes technical solutions of this application with reference to the accompanying drawings. It is clear that the described embodiments are merely some rather than all of embodiments of this specification.

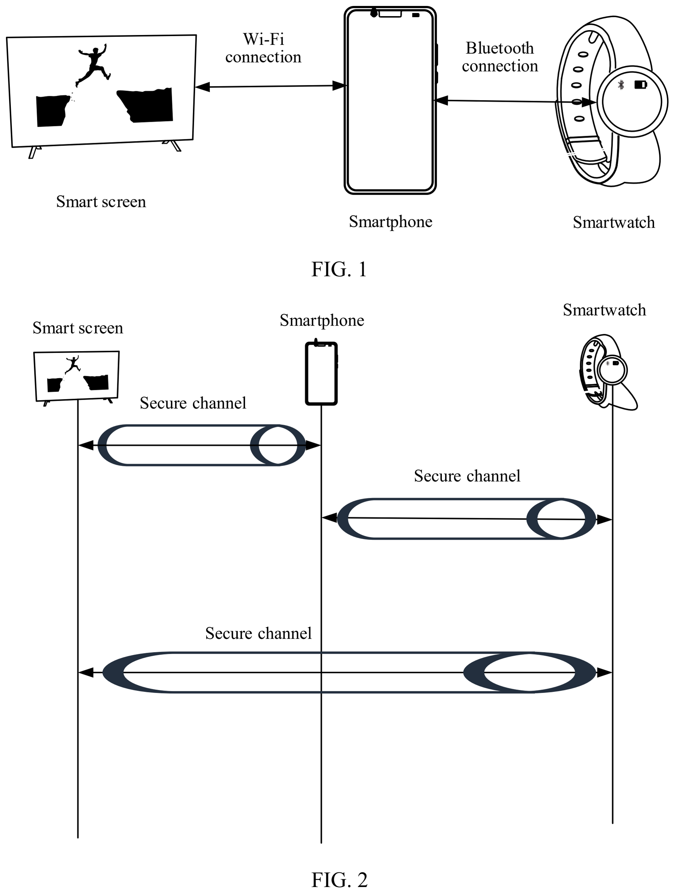

In a decentralized network (also referred to as a heterogeneous network) including a plurality of nodes, for example, a terminal self-organizing network, two nodes in the network that are not directly connected can implement cross-node communication via another node. For example, FIG. 1 is a diagram of a heterogeneous network. The heterogeneous network in FIG. 1 includes a smart screen (namely, a smart display), a smartphone, and a smartwatch. The smart screen and the smartwatch cannot directly communicate with each other due to performance of the smart screen and the smartwatch or because the smart screen and the smartwatch are not within signal ranges of each other, and consequently, the smartphone needs to serve as a relay forwarding device.

Specifically, the smartphone is connected to the smart screen via a wireless hotspot, and the smartphone is connected to the smartwatch via Bluetooth. When the smart screen communicates with the smartwatch, the smart screen sends a data packet to the smartphone, and the smartphone serving as a forwarding device forwards the data packet to the smartwatch. In this way, communication between the smartwatch and the smart screen is implemented.

Because most nodes in a network are data sources rather than forwarding devices, and when a node serves as a forwarding device, an original network security model of the node is disrupted. In addition, the node consumes energy when performing a data forwarding service. In consideration of energy saving, security, and the like, before data forwarding is performed by an intermediate node, a sending node corresponding to the data packet needs to be authenticated, and the data packet is forwarded only after the authentication succeeds.

FIG. 2 is a diagram of end-to-end cross-hop authentication in the heterogeneous network shown in FIG. 1. Before the smart screen communicates with the smartwatch, mutual authentication is performed between the smartwatch and the smartphone, and a secure channel is established after the mutual authentication succeeds. Mutual authentication is performed between the smartphone and the smart screen, and a secure channel is established after the mutual authentication succeeds. Then, the smartwatch and the smart screen can communicate with each other through the secure channels.

After a user of the smartphone, the smart screen, and the smartwatch in the heterogeneous network in FIG. 2 logs in, an account of the user sends a network identifier, public and private key information, and the like to the smartphone, the smart screen, and the smartwatch.

Before the smart screen communicates with the smartwatch, the user may select, on an interface of the smart screen, a device (namely, the smartwatch) to communicate with in the heterogeneous network. In this case, the smart screen initiates a cross-node connection to the smartwatch.

First, the smart screen initiates mutual authentication and connection establishment with the smartphone, to establish the secure channel between the smart screen and the smartphone. Mutual authentication may be performed by using a mutual authentication protocol like a password-authenticated key exchange (PAKE) protocol or a transport layer security (TLS) protocol. Through the mutual authentication, authenticity of identities of the smart screen and the smartphone is authenticated.

Then, after the mutual authentication between the smart screen and the smartphone is completed, the smartphone initiates mutual authentication and connection establishment with the smartwatch, to establish the secure channel between the smartphone and the smartwatch.

Then, after the mutual authentication between the smartphone and the smartwatch is completed, data packet transmission between the smartwatch and the smart screen is performed through the secure channel between the smart screen and the smartphone and the secure channel between the smartphone and the smartwatch. That is, a data packet is forwarded through an application layer of the smartphone, to implement mutual cross-hop authentication between the smartwatch and the smart screen. In this way, end-to-end application layer security is implemented.

A process of the cross-hop authentication shown in FIG. 2 has the following problems:

First, the process of the cross-hop authentication includes multiple mutual authentications. Consequently, authentication overheads of nodes and cross-hop communication latency between the nodes are increased. Before the smartwatch and the smart screen in FIG. 2 communicate with each other, in the heterogeneous network, three mutual authentications need to be performed, and there are a large number of mutual authentication processes.

In addition, each secure channel corresponds to a different encryption key. In a process in which a relay node forwards data, because the forwarded data needs to pass through different secure channels, when forwarding data received through one secure channel to another secure channel, the intermediate node needs to decrypt the forwarded data by using a key corresponding to the secure channel on a sending side, and then encrypt the forwarded data by using a key of the secure channel on a receiving side. The encryption and decryption operations consume a large amount of energy of the intermediate node, and increase data transmission latency.

Based on the foregoing problem, an embodiment of this application provides a cross-node data transmission method. The method is applied to a node in a decentralized network. After neighbor discovery between adjacent nodes is completed, the adjacent nodes perform networking by sending route flooding messages to each other. The route flooding message carries unidirectional authentication information and challenge information. A receiving node of the route flooding message performs identity authentication on a sending node of the route flooding message by using the unidirectional authentication information, to authenticate whether the route flooding message is sent by an adjacent node. If it is determined, based on an authentication result, that the route flooding message is sent by the adjacent node, the receiving node of the route flooding message establishes a correspondence between the sending node and the challenge information. After networking is completed, the sending node sends a data packet to a destination node via a relay node, where the data packet carries challenge response information corresponding to the sending node, the sending node is a source node of the data packet, and the receiving node is the destination node of the data packet. There is at least one relay node between the sending node and the receiving node, and the relay node is configured to forward the data packet from the sending node to the receiving node. The sending node sends the data packet to the adjacent relay node. The relay node receives the data packet sent by the adjacent sending node, and the relay node verifies the challenge response message based on the challenge information. If a verification result is that the challenge information matches the challenge response message, and it is determined that the data packet is sent by the sending node, the relay node updates the data packet to obtain a forwarding packet, and then sends the forwarding packet to a next-hop node. In the foregoing data transmission process, the relay node does not need to perform mutual authentication with the sending node or the relay node of a previous hop of the data packet, reducing the number of mutual authentications. In the process in which the relay node forwards the data packet, the relay node does not need to encrypt or decrypt the forwarded data packet, thereby reducing energy consumption of the relay node and data transmission latency.

An application scenario to which the cross-node data transmission method provided in this application is applicable is first described.

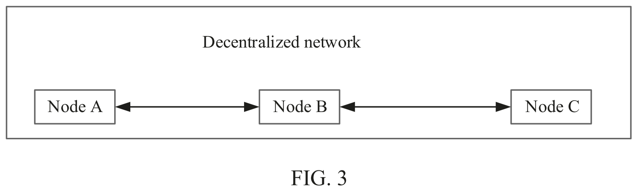

The following uses an application scenario shown in FIG. 3 for description. FIG. 3 is a diagram of a scenario of a cross-node data transmission method according to an embodiment of this application. FIG. 3 shows three nodes, and the three nodes are included in a decentralized network. The decentralized network may be a self-organizing network or another type of network. It may be understood that, in another embodiment, the number of nodes may be set based on an actual application scenario, for example, may be 4, 5, or greater than 5. That is, the number of nodes in the decentralized network is at least 3.

In FIG. 3, there is one relay node between a source node and a destination node of a transmitted data packet. It may be understood that there may be two or more relay nodes between the source node and the destination node of the transmitted data packet.

In FIG. 3, a node A needs to communicate with a node C, and a data packet transmitted between the node A and the node C needs to be forwarded by a node B. To ensure data security, before forwarding the data packet, the node B needs to authenticate the data packet to determine that the data packet is sent by the node A, that is, ensure that the forwarded data packet is not forged.

Because the decentralized network in FIG. 3 is a distributed temporary network, all nodes can join or leave the network at any time. Before networking, a plurality of nodes in the decentralized network shown in FIG. 3 build mutual trust at a user layer by default. That is, each node in the decentralized network is trusted.

In some possible implementations, each node has a user account, and all nodes are used by a same user. After the user logs in to a corresponding node, because all the nodes in the network are used by a same account, the user may discover another node in the decentralized network through an interface of an application program in the node, and may further determine that all the nodes in the decentralized network are trusted nodes. In this way, mutual trust is built on user planes of all the nodes in the decentralized network by using the same user account.

In some possible implementations, a user account of at least one node in the decentralized network is different from a user account of another node, and the user account of the node is authorized to another user to use the node. Therefore, all nodes in the decentralized network are used by a same user, and it can be determined that all the nodes in the decentralized network are trusted nodes.

In some possible implementations, all nodes in the decentralized network are located in a preset area during networking. For example, nodes in a decentralized network are in a same office. In this case, it may be determined that all the nodes in the decentralized network are trusted.

Optionally, the decentralized network in FIG. 3 may be a heterogeneous self-organizing network (or a heterogeneous network). The heterogeneous network includes computers, network devices, and systems produced by different manufacturers. Nodes in the heterogeneous network run on different protocols to support different functions or applications. An interconnection capability between nodes is improved through a heterogeneous connection, a connection range is expanded, and network deployment costs are reduced.

The node in FIG. 3 may be a node that has a data forwarding function, like a mobile terminal or a router.

For ease of description, in the following embodiments, the node B serves as a relay node, and the node A and the node C each serve as an adjacent node of the node B. It may be understood that, in another embodiment, the node A and the node C may serve as relay nodes, and the node B may serve as a source node or a destination node of the data packet.

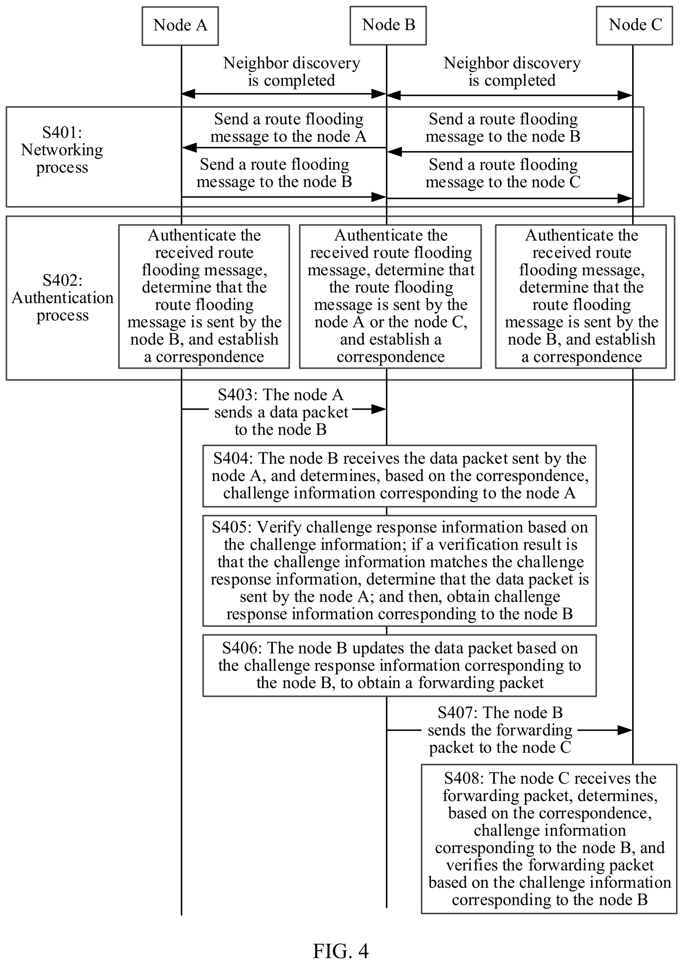

FIG. 4 is a schematic flowchart of a cross-node data transmission method according to an embodiment of this application. The following uses an example in which FIG. 4 is applied to the decentralized network shown in FIG. 3 for description. As shown in FIG. 4, the cross-node data transmission method includes S401 to S408.

S401: Perform a networking process.

The networking process includes: Before a node joins the decentralized network, the node performs neighbor discovery with at least one node in the decentralized network. After neighbor discovery is completed between adjacent nodes in the decentralized network, the adjacent nodes send route flooding messages to each other, to establish a routing relationship between the adjacent nodes by using the route flooding messages, and construct a routing table. Then, a routing relationship between cross-hop nodes is established. The route flooding message carries unidirectional authentication information and challenge information that are of a corresponding node.

As shown in FIG. 4, a node A and a node B, and the node B and a node C are all adjacent nodes. After neighbor discovery is completed, the node A sends a route flooding message to an adjacent node (the node B) of the node A, where the route flooding message carries unidirectional authentication information and challenge information that correspond to the node A. The node B sends flooding messages to adjacent nodes (the node A and the node C) of the node B, where the route flooding message carries unidirectional authentication information and challenge information that correspond to the node B. The node C sends a flooding message to an adjacent node (the node B) of the node C, where the route flooding message carries unidirectional authentication information and challenge information that correspond to the node C.

The neighbor discovery is a process in which the adjacent nodes discover each other. For example, a terminal detects Bluetooth information sent by a smartwatch, or the terminal detects a channel signal and the like, to determine an adjacent node that can be connected.

The route flooding message may be a route message transmitted by using link-state advertisement (Link-State Advertisement, LSA) or a route message transmitted by using open shortest path first (Open Shortest Path First, OSPF). The route flooding message is used for performing networking between adjacent nodes after neighbor discovery is completed between the adjacent nodes. That is, the route flooding messages are sent between the adjacent nodes to perform route flooding, construct the routing table, and establish the routing relationship between the cross-hop nodes, so that networking is implemented.

S402: Perform an authentication process.

The authentication process includes: after receiving a route flooding message sent by an adjacent node, authenticating the route flooding message based on unidirectional authentication information in the route flooding message, to determine whether the route flooding message is sent by the adjacent node; and if an authentication result is that the route flooding message is sent by the adjacent node, establishing a correspondence between challenge information and the adjacent node; or if the authentication result is that the route flooding message is not sent by the adjacent node, discarding the route flooding message.

As shown in FIG. 4, the node A authenticates the route flooding message based on the unidirectional authentication information in the route flooding message sent by the node B, to determine that the route flooding message is sent by the node B, and establishes a correspondence between the node B and the challenge information in the corresponding route flooding message, and then stores the correspondence in the node A.

In FIG. 4, the node B authenticates the route flooding messages based on the unidirectional authentication information in the route flooding messages sent by the node A and the node C, to determine that the route flooding message is sent by the node A or the node C, and then establishes a correspondence between the node A or the node C and the challenge information in the corresponding route flooding message, and stores the correspondence.

Optionally, a correspondence may be stored in a corresponding node in a table form. For example, the node A stores the correspondence of the node B in a challenge mapping table in the node A, and the challenge mapping table includes correspondences of a plurality of nodes.

Optionally, the correspondence includes a node identifier and challenge information corresponding to a node, where the node identifier may be a device identifier, for example, a unique device identifier (Unique Device Identifier, UDID) of a smartphone.

In some possible implementations, if a node in the decentralized network has a function or a configuration of performing mutual identity authentication on an adjacent node, the node in the decentralized network offloads (or cancels) mutual identity authentication on a neighbor device by using a route flooding message, to avoid increasing the number of authentications and an authentication latency due to mutual identity authentication on the adjacent node during cross-node communication.

In some possible implementations, after neighbor discovery is completed between the adjacent nodes, the adjacent nodes periodically send route flooding messages to each other. After receiving a new route flooding message sent by an adjacent node, a relay node authenticates the route flooding message based on unidirectional authentication information in the latest received route flooding message, to determine whether the route flooding message is sent by the adjacent node. If an authentication result is that the route flooding message is sent by the adjacent node, the relay node updates a correspondence between the adjacent node and challenge information. If an authentication result is that the route flooding message is not sent by the adjacent node, the relay node discards the route flooding message.

S403: The node A sends a data packet to the node B.

The data packet carries challenge response information, and the challenge response information corresponds to the challenge information in the route flooding message sent by the node A to the node B. A source node corresponding to the data packet is the node A, a destination node is the node C, and the node B is not the destination node of the data packet but serves as a relay node to forward the data packet.

It may be understood that FIG. 4 is merely an instance provided in this application, where the node B serves as the only relay node. In another embodiment, the number of relay nodes between the source node and the destination node of the data packet may be another quantity, for example, 2 or greater than 2.

Optionally, after the node A sends the route flooding message to the adjacent node of the node A, the node A stores the corresponding challenge information, determines, based on the challenge information before forming the data packet, challenge response information corresponding to the node A, and then forms the data packet based on the challenge response information.

For example, the challenge information and the challenge response information meet a challenge response mechanism. In other words, the challenge information in the route flooding message sent by the node A to the node B may be completely the same as the challenge response information carried in the data packet sent by the node A to the node B, or processed challenge information and the challenge response information are completely the same.

In some possible implementations, when the node A needs to communicate with another adjacent node in the decentralized network, the node A forms a data packet, where the data packet carries challenge response information, and the challenge response information corresponds to challenge information in a route flooding message sent by the node A to the adjacent node. Then, the node A queries a routing table to obtain information about a next-hop node, and sends the data packet to the next-hop node.

S404: The node B receives the data packet sent by the node A, and determines, based on the correspondence, the challenge information corresponding to the node A.

Optionally, the node B stores a plurality of correspondences. The node B receives the data packet sent by the node A, queries, based on a node identifier (for example, a UDID of the node A) of the node A, for the correspondence corresponding to the node A, and determines, based on the correspondence corresponding to the node A, the challenge information corresponding to the node A.

S405: Verify the challenge response information based on the challenge information; if a verification result is that the challenge information matches the challenge response information, determine that the data packet is sent by the node A; and then, obtain challenge response information corresponding to the node B.

Specifically, the challenge response information corresponding to the node B matches the challenge information carried in the route flooding message sent by the node B to the adjacent node of the node B.

Specifically, the node B uses the challenge response mechanism to verify the data packet. In a networking process, the route flooding message sent by the node A to the node B carries the challenge information corresponding to the node A. After networking is completed, the data packet sent by the node A to the node B carries the challenge response information corresponding to the node A. The node B verifies the challenge response information based on the challenge information. If the challenge information is the same as the challenge response information, or verification information formed based on the challenge information is the same as the challenge response information, the node B determines that the challenge information and the challenge response information that are of the node A match, and further determines that the data packet is sent by the node A to the node B.

Further, if the challenge information is different from the challenge response information, or the verification information formed based on the challenge information is different from the challenge response information, the node B determines that the challenge information and the challenge response information that are of the node A do not match, and further determines that the data packet is not sent by the node A to the node B, and then discards the data packet.

S406: The node B updates the data packet based on the challenge response information corresponding to the node B, to obtain a forwarding packet.

In some optional implementations, the node B replaces the challenge response information corresponding to the node A in the data packet with the challenge response message corresponding to the node B, to obtain the forwarding packet, where the forwarding packet carries the challenge response information corresponding to the node B.

Further, if the challenge response information corresponding to the node A is located in an extension header of the data packet, the node B replaces the challenge response information corresponding to the node A in the extension header of the data packet with the challenge response message corresponding to the node B.

S407: The node B sends the forwarding packet to the node C.

Specifically, the node B queries the routing table or queries the data packet for the information about the next-hop node, and then sends the forwarding packet to the next-hop node (for example, the node C).

S408: The node C receives the forwarding packet, determines, based on the correspondence, the challenge information corresponding to the node B, and verifies the forwarding packet based on the challenge information corresponding to the node B.

Optionally, after receiving the forwarding packet sent by the node B, the node C queries, based on identification information and the correspondence that are of the node B and that are stored in the node C, for the challenge information corresponding to the node B, and then verifies whether the challenge information corresponding to the node B matches the challenge response information in the forwarding packet. If the challenge information does not match the challenge response information in the forwarding packet, the node C determines that the forwarding packet is not sent by the node B, and discards the forwarding packet. If the challenge information matches the challenge response information, the node C determines that the forwarding packet is sent by the node B.

Further, because the node C serves as a destination node of the forwarding packet, after receiving the forwarding packet, the node C does not need to forward the forwarding packet, and the node C parses payload information of the forwarding packet.

In this way, in a cross-node data transmission process, a relay node (for example, the node B) authenticates a route flooding message by using unidirectional authentication information in the route flooding message that is sent by an adjacent node and that is received during networking, to determine, through authentication, that the route flooding message is sent by the adjacent node. Then, networking is implemented by using the route flooding message. After networking is completed, after receiving a data packet sent by the adjacent node, the relay node verifies challenge response information in the data packet based on challenge information corresponding to the adjacent node. When the challenge response information matches the challenge information, the relay node determines that the data packet is sent by the adjacent node. Then, the relay node updates the data packet based on challenge response information corresponding to the relay node, to obtain a forwarding packet, and forwards the forwarding packet to a next-hop node. In the foregoing data transmission process, the relay node does not need to perform mutual authentication with the adjacent node, so that an interaction process of mutual authentication is saved. The relay node verifies the forwarded data packet by using the challenge information corresponding to the adjacent node, and does not need to decrypt or encrypt the forwarded data packet, thereby reducing energy consumption of the relay node and data transmission latency.

When a node joins the decentralized network or networking of the decentralized network, two adjacent nodes that complete neighbor discovery send route flooding messages to each other. When a route flooding message sent by an adjacent node is received, the route flooding message needs to be authenticated, to determine whether the route flooding message is sent by the adjacent node. Because a private key (Private Key) of the node is unique and private (only known by the node), the adjacent node forms signature information of the route flooding message by using the private key, and another node verifies the signature information by using a public key of the adjacent node, to verify whether the route flooding message is sent by the adjacent node or is forged by another node.

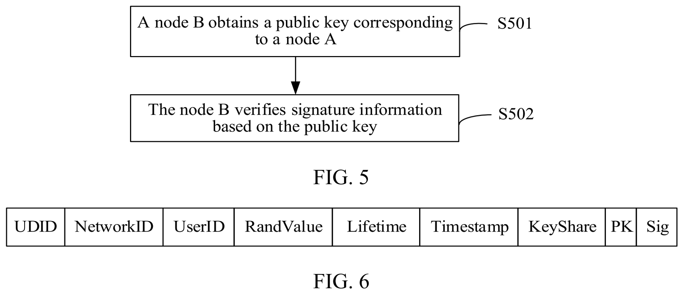

In some possible implementations, the unidirectional authentication information includes signature information, and the signature information is obtained through encryption performed by a sending node (or a source node) of the route flooding message on the route flooding message by using a private key corresponding to the sending node. FIG. 5 is a diagram of a cross-node data transmission method according to an embodiment of this application. After receiving a route flooding message sent by a node A, that a node B authenticates the route flooding message based on unidirectional authentication information in the route flooding message includes the following steps.

S501: The node B obtains a public key corresponding to the node A.

In some possible implementations, after a user logs in to an account via the node B, a network side (for example, a service cloud side) on which the account is located delivers a public key of a node that builds mutual trust on a user plane with the node B to a relay node. The node B may form a correspondence between a public key and a corresponding node and locally store the correspondence, for example, a correspondence between an identifier of the node A and a corresponding public key of the node A, and a correspondence between an identifier of a node C and a corresponding public key of the node C. In this way, the node queries the correspondence of the public key based on the identifier of the node A, for the public key of the node.

In some possible implementations, if the unidirectional authentication information further includes a public key corresponding to a node, after receiving the route flooding message, the node B parses the unidirectional authentication information in the route flooding message, to determine the public key corresponding to the node A.

S502: The node B verifies signature information based on the public key.

Optionally, because the signature information is obtained by the node A by encrypting the route flooding message by using a private key corresponding to the node A, the node B decrypts the signature information in the route flooding message by using the public key corresponding to the node A, and determines whether data obtained through decryption is the same as that in the route flooding message. If the data is the same as that in the route flooding message, the node B determines that the route flooding message is sent by the sending node. If the data is different from that in the route flooding message, the node B determines that the route flooding message is not sent by the sending node, and discards the route flooding message.

In this way, the node B obtains the public key corresponding to the node A. Because the public key is unique, the node B performs identity authentication on the node A by using the public key, to determine an identity of the node A. Then, the node B verifies, based on the public key, the signature information in the route flooding message corresponding to the node A, to verify that the route flooding message is sent by the node A instead of being forged by another node. That is, message authentication is performed on the route flooding message.

Authentication on the route flooding message based on the public key, the private key, and the signature information is an asymmetric key-based authentication manner. It may be understood that in another embodiment, source authentication on the route flooding message may be performed by using a symmetric key. Optionally, if all nodes in the decentralized network are used by a same user, in a scenario in which the user logs in to an account via a node, a user account cloud may periodically send a corresponding node key parameter (where different nodes have different node key parameters) to each node. When sending a route flooding message to an adjacent node, the node forms key information based on the node key parameter, calculates integrity protection information in route flooding information based on the key information, and uses the integrity protection information and the node key parameter as unidirectional authentication information corresponding to the node. When receiving the route flooding message, the adjacent node determines an identity of the node based on the node key parameter. Then, the adjacent node forms key information based on the node key parameter, calculates integrity protection information in the route flooding information based on the key information, and then compares the integrity protection information with the integrity protection information in the route flooding message. If the calculated integrity protection information is the same as the integrity protection information in the route flooding message, the adjacent node determines that the route flooding information is sent by a corresponding node. If the calculated integrity protection information is different from the integrity protection information in the route flooding message, the adjacent node determines that the route flooding message is not sent by the corresponding node, and discards the route flooding message.

After receiving the route flooding message sent by the node A, the node B performs identity authentication on the node A based on the unidirectional authentication information, and performs message authentication on the route flooding message, to determine that the route flooding message is sent by the node A. After completing the foregoing authentication, the node B forms a correspondence between the node A and challenge information corresponding to the node A. After networking is completed, the node B receives a data packet sent by the node A, and verifies the data packet based on the challenge information corresponding to the node A, to determine that the data packet is sent by the node A. The node B can forward the data packet only after verification is completed. In the foregoing verification process, a challenge response mechanism is used. It can be determined that the data packet is sent by the node A, provided that the challenge information matches challenge response information. If the challenge information does not match the challenge response information, it is determined that the data packet is not sent by the node A.

Further, the node B verifies the data packet based on the challenge information. If the challenge information includes a challenge random number, the challenge response information includes a response random number. If the challenge random number is equal to the response random number, the challenge information matches the challenge response information, and it is determined that the data packet is sent by the node A. If the challenge random number is not equal to the response random number, the challenge information does not match the challenge response information, and it is determined that the data packet is not sent by the node A. Therefore, verifying the challenge response information based on the challenge information, to obtain a verification result includes:

If the challenge random number is equal to the response random number, the challenge information matches the challenge response information, and it is determined that the data packet is sent by the node A.

If the challenge random number is not equal to the response random number, the challenge information does not match the challenge response information, and it is determined that the data packet is not sent by the node A.

In this way, the challenge random number in the challenge information is compared with the response random number in the challenge response information, to detect whether the data packet is sent by the node A, so that the data packet is verified.

It may be understood that, to improve security of the challenge response mechanism, each challenge random number has a corresponding validity period. When a challenge random number that corresponds to an adjacent node and that is stored in the node is within the validity period, the challenge random number is determined as valid, and the data packet can be verified. If the challenge random number is not within the validity period, the challenge random number cannot be used for verification of the data packet, and update of the challenge random number may be triggered. Therefore, the challenge information further includes validity duration. Before the data packet is verified based on the challenge information, the following steps are further included.

Whether the challenge information is within the validity period is verified based on the validity duration. If the challenge information is within the validity period, the data packet is verified based on the challenge information.

If the challenge information is not within the validity period, the data packet is discarded, in other words, the data packet is not verified, and the data packet does not need to be forwarded.

In this way, before the data packet is verified based on the challenge information, validity of the challenge information further needs to be detected, and the data packet is verified based on the challenge information that is within the validity period. If the challenge information is not within the validity period, the data packet is not verified. The validity period of the challenge information is verified, to improve security of the challenge information.

In some possible implementations, when the data packet is verified based on the challenge information, the data packet may alternatively be verified by using a message verification code. To be specific, the challenge information includes a first temporary key agreement parameter, and the first temporary key agreement parameter is a challenge value corresponding to the node A. The node B has a second temporary key agreement parameter corresponding to the node B. A node may calculate a challenge information verification code by using the first temporary key agreement parameter and the second temporary key agreement parameter. Diffie-Hellman key exchange (Diffie-Hellman key Exchange, DHE) or elliptic curve Diffie-Hellman key exchange (Elliptic Curve Diffie-Hellman key Exchange, ECDHE) may be used to construct a security verification key. The challenge response information also includes a response information verification code, and then, whether the challenge information verification code is equal to the response information verification code is determined through comparison. If the challenge information verification code is equal to the response information verification code, it is determined that the data packet is sent by the node A. If the challenge information verification code is not equal to the response information verification code, it is determined that the data packet is not sent by the node A.

In this way, the challenge random number in the challenge information is compared with the response random number in the challenge response information, to detect whether the data packet is sent by the node A, so that the data packet is verified.

In the foregoing embodiment, when the node B verifies the data packet based on the challenge information, the challenge information may include a challenge random value or a temporary key agreement parameter. It may be understood that the challenge information may include the challenge random value and the first temporary key agreement parameter. The node B calculates the challenge information verification code based on the first temporary key agreement parameter and the second temporary key agreement parameter, and then compares the challenge random number with the response random number, and compares the challenge information verification code with the response information verification code. If the challenge random number is equal to the response random number, and the challenge information verification code is equal to the response information verification code, it is determined that the data packet is sent by the node A. If the challenge random number is not equal to the response random number, or the challenge information verification code is not equal to the response information verification code, it is determined that the data packet is not sent by the node A.

In this way, the challenge random number in the challenge information is compared with the response random number in the challenge response information, and the challenge information verification code is compared with the response information verification code, to detect whether the data packet is sent by the node A, so that the data packet is verified.

In some possible implementations, the route flooding message further carries a timestamp, and the timestamp is used to identify time of a current route flooding message. A replay attack is prevented by using a feature of the timestamp.

Further, both a sending node and a receiving node of the route flooding message store corresponding timestamps, and a timer is constructed based on the timestamps. When the timer expires, the sending node resends a route flooding message to update the route flooding message. In other words, a route flooding message is periodically sent based on the timestamp, to update a correspondence in real time.

FIG. 6 is a diagram of a structure of a route flooding message according to an embodiment of this application. The route flooding message in FIG. 6 includes a UDID, NetworkID, UserID, RandValue, Lifetime, Timestamp, KeyShare, PK, and Sig.

The UDID is a unique identifier of a node. NetworkID is an identifier of a network in which the node is located, and may be a media access control address (Media Access Control Address, MAC address) or an internet protocol address (Internet Protocol Address, IP address) of the network in which the node is located. UserID is an identifier of an account to which the node currently logs in. RandValue is a challenge random number, that is, the random number is used as a challenge value. Lifetime is used to identify validity duration of the challenge random number. Timestamp is used to identify time of a current route flooding message. KeyShare is a temporary key agreement parameter, and is used to establish a quick security verification code between adjacent nodes. Param (PK) is a public key corresponding to the node, and the adjacent nodes complete identity authentication by using the parameter. Sig is signature information. A source node of the route flooding message signs the route flooding message by using a private key (Private Key) to form the signature information, where the signature information is used to ensure authenticity of the route flooding message.

The following uses an example in which a node B receives the route flooding message that is shown in FIG. 6 and that is sent by a node A for description.

First, the node B determines a public key of the node A based on the UDID and UserID in the route flooding message, and performs identity authentication on the node A based on the public key.

If identifiers (that is, a UDID and UserID) of the node A match the corresponding public key, it is determined that the identity authentication on the node A succeeds; or if the identifiers (that is, the UDID and UserID) of the node A do not match the corresponding public key, it is determined that the identity authentication on the node A fails.

Then, if the identity authentication on the node A succeeds, signature data is verified based on the public key, to implement message authentication on the route flooding message, to authenticate that the route flooding message is sent by the node A.

If a verification result of verifying the signature data based on the public key is a success, it is determined that the route flooding message is sent by the node A, and a correspondence between challenge information and the node A is established, where the challenge information includes RandValue, Lifetime, and KeyShare.

If a verification result of verifying the signature data based on the public key is a failure, it is determined that the route flooding message is not sent by the node A, and the route flooding message is discarded.

Optionally, the correspondence that is of the node A and that is maintained by the node B includes a UDID of the node A, UserID of the node A, NetworkID, PK of the node A, RandValue of the node A, Lifetime, KeyShare of the node A, Timestamp, and key_{AB}. key_{AB} is a security verification key formed based on KeyShare of the node A and KeyShare of the node B. A formation manner may be DHE or ECDHE, or another key derivation manner. A security verification key is generated by using temporary key parameters provided by two adjacent nodes, and the security verification key is used as one of challenge values.

Optionally, the node B stores a neighbor device challenge mapping table, and the neighbor device challenge mapping table has a plurality of correspondences. For example, if the node B in a decentralized network has two adjacent nodes, the neighbor device challenge mapping table in the node B includes the correspondence of the node A and a correspondence of a node C.

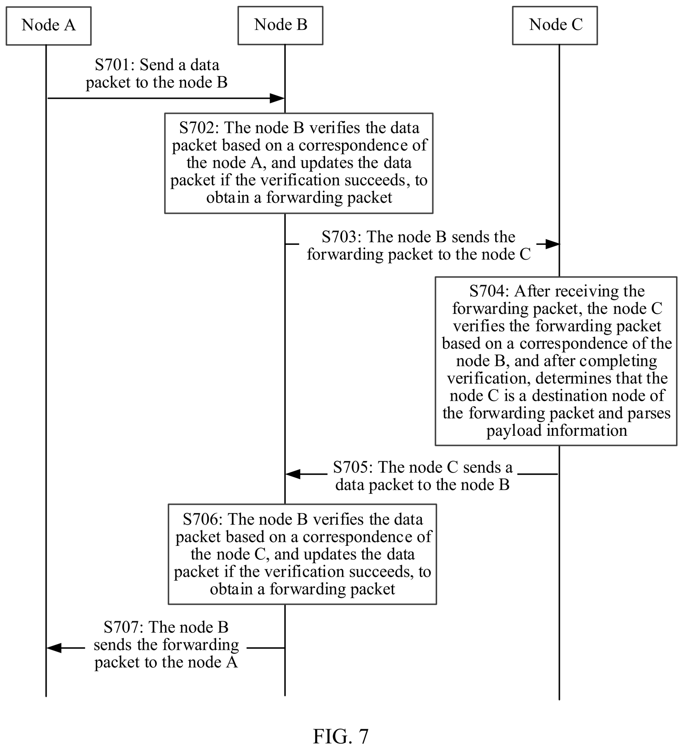

In the decentralized network, if cross-node data transmission is performed, cross-node authentication needs to be performed between a source node and a destination node. After authentication is completed, the two nodes can implement secure cross-node communication. The following uses cross-node authentication between the node A and the node C as an example for description. After the node A, the node B, and the node C complete neighbor discovery, route flooding messages are sent to each other between two adjacent nodes, a routing relationship of the decentralized network is established by using the route flooding messages, and unidirectional identity authentication on the adjacent nodes and message authentication are completed, and then, correspondences of the nodes are established. Then, the node A sends a data packet to the node B, the node B verifies the data packet based on challenge information in a correspondence, and sends the verified data packet to a next-hop node. A payload includes mutual authentication information, and the node C starts a mutual authentication process with the node A based on the mutual authentication information. In the mutual authentication process, the node C may send a data packet to node B, and the node B verifies the data packet and forwards the verified data packet to the node A. That is, data packets exchanged between the node A and the node C in the mutual authentication process are forwarded by the node B. The mutual authentication process between the node A and the node C needs to be completed through a plurality of interactions between the node A and the node C. That is, the node A needs to send the data packet to the node C via the node B, and the node C also needs to send the data packet to the node A via the node B. The following provides descriptions with reference to FIG. 7.

FIG. 7 is a schematic flowchart of a cross-node data transmission method according to an embodiment of this application. After neighbor discovery is completed between nodes in a decentralized network, and route flooding messages are sent to each other, the method further includes the following steps.

S701: A node A sends a data packet to a node B.

The data packet carries a security extension header and a payload (payload), the security extension header includes challenge response information, and the challenge response information includes a response random number corresponding to the node A, a response random number corresponding to the node B, and a security verification code.

Optionally, when the node A initiates cross-hop authentication to a node C, the node A queries a routing table to determine that a next hop is the node B, and then forms the data packet based on a correspondence of the node B.

S702: The node B verifies the data packet based on a correspondence of the node A, and updates the data packet if the verification succeeds, to obtain a forwarding packet.

After receiving the data packet sent by the node A, the node B verifies the data packet based on the correspondence of the node A. To be specific, the node B first determines, based on identification information and the correspondence that are of the node A, challenge information corresponding to the node A, and determines whether a challenge random value in the challenge information of the node A exceeds validity time. If the challenge random value exceeds the validity time, the node B discards the data packet. If the challenge random value does not exceed the validity time, the node B determines whether the challenge random value is equal to a response random value in challenge response information. If the challenge random value is not equal to the response random value, the node B discards the data packet. If the challenge random value is equal to the response random value, the node B calculates a security verification code based on a temporary key parameter in the challenge information, and then compares the calculated security verification code with a security verification code in the data packet. If the calculated security verification code is not equal to the security verification code in the data packet, the node B discards the data packet. If the calculated security verification code is equal to the security verification code in the data packet, the node B obtains challenge response information corresponding to the node B, and replaces the challenge response information corresponding to the node A in the data packet with the challenge response information corresponding to the node B, to obtain the forwarding packet.

S703: The node B sends the forwarding packet to the node C.

The node B queries the routing table, determines that the next hop is the node C, and then sends the forwarding packet to the node C.

S704: After receiving the forwarding packet, the node C verifies the forwarding packet based on the correspondence of the node B, and after completing verification, determines that the node C is a destination node of the forwarding packet and parses payload information.

The node C parses the payload information, and then triggers a mutual authentication procedure between the node C and the node A.

Because two nodes need to interact multiple times in a mutual authentication process between the nodes, the node C may alternatively send mutual authentication information to the node A via the node B.

S705: The node C sends a data packet to the node B.

S706: The node B verifies the data packet based on a correspondence of the node C, and updates the data packet if the verification succeeds, to obtain a forwarding packet.

S707: The node B sends the forwarding packet to the node A.

In this way, cross-node data transmission is implemented between the node A and the node C through the foregoing procedure. There may be one or more relay nodes between the node A and the node C. If there are two or more relay nodes, another node processes a data packet in a same manner as the node B. Details are not described herein again. Cross-node data transmission is implemented between the node A and the node C through forwarding by the relay node. Cross-node authentication between the node A and the node C may be completed through a plurality of data transmissions.

The mutual authentication between the node A and the node C may be based on, but not limited to, a public-private key authentication protocol, a password-authenticated key exchange (Password-Authenticated Key Exchange, PAKE) protocol, or a transport layer security (Transport Layer Security, TLS) protocol. In a cross-node authentication process, data packets exchanged between the node A and the node C are forwarded after being verified by the node B.

Further, after cross-node authentication is completed between the node A and the node C, a secure channel is established between the node A and the node C. However, data transmitted between the node A and the node C still needs to be forwarded by the node B. However, because the secure channel is established between the node A and the node C, data transmitted across nodes may be encrypted by using a key negotiated by the node A and the node C.

According to the cross-node data transmission method provided in this application, after neighbor discovery between adjacent nodes is completed, the adjacent nodes perform networking by sending route flooding messages to each other, where the route flooding message carries unidirectional authentication information and challenge information. A receiving node of the route flooding message performs identity authentication on a sending node of the route flooding message by using the unidirectional authentication information, to authenticate whether the route flooding message is sent by an adjacent node. If it is determined, based on an authentication result, that the route flooding message is sent by the adjacent node, the relay node establishes a correspondence between the sending node and the challenge information. After networking is completed, the adjacent node sends the data packet to a destination node via the relay node, where the data packet carries challenge response information corresponding to the adjacent node. The relay node receives the data packet sent by the adjacent node, and the relay node verifies the challenge response message based on the challenge information. If a verification result is that the forwarding packet is sent by the adjacent node, the relay node updates the data packet to obtain a forwarding packet, and then sends the forwarding packet to a next-hop node. In the foregoing data transmission process, the relay node does not need to perform mutual authentication with the adjacent node, reducing the number of mutual authentications. In a process in which the relay node forwards the data packet, the relay node does not need to encrypt or decrypt the forwarded data packet, so that energy consumption of the relay node is reduced.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing methods may be unnecessary, or some steps may be newly added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. Features in the manners, categories, cases, and embodiments may be combined without contradiction.

It should be further understood that numerals used in embodiments of this application are merely distinguished for ease of description, but are not intended to limit the scope of embodiments of this application. Sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between embodiments. For same or similar parts that are not mentioned, refer to these embodiments. For brevity, details are not described herein again.

The foregoing describes embodiments of the method and the network provided in embodiments of this application with reference to FIG. 1 to FIG. 7. The following describes a node provided in embodiments of this application.

In embodiments, functional module division may be performed on each node according to the foregoing method. For example, each functional module may be obtained through division based on each corresponding function, or two or more functions may be integrated into one processing module. The integrated module may be implemented in a form of hardware. It should be noted that, module division in embodiments is an example, and is merely logical function division. In an actual implementation, another division manner may be used.

It should be noted that related content of the steps in the foregoing method embodiments may be referenced to function descriptions of corresponding functional modules, and details are not described herein again.

The node provided in this embodiment of this application is configured to perform the cross-node data transmission method provided in the foregoing method embodiments. Therefore, a same effect as the foregoing implementation method can be achieved. When an integrated unit is used, the node may include a processing module, a storage module, and a communication module. The processing module may be configured to control and manage an action of the node. For example, the processing module may be configured to support the node in performing steps performed by a processing unit. The storage module may be configured to support storage of program code, data, and the like. The communication module may be configured to support communication between the node and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of digital signal processing (digital signal processing, DSP) and a microprocessor. The storage module may be a memory. The communication module may be specifically a device that interacts with another node, for example, a radio frequency circuit, a Bluetooth chip, or a Wi-Fi chip.

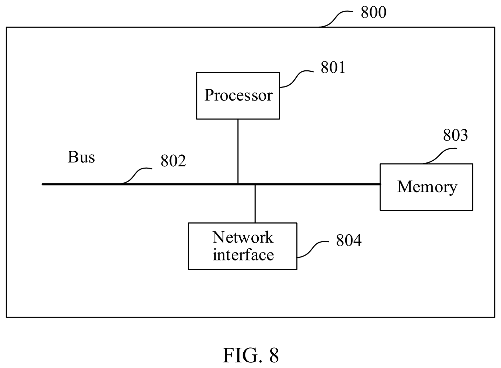

FIG. 8 is a diagram of a structure of an example node according to this application. The node shown in FIG. 8 may perform steps in the cross-node data transmission method performed by any node provided in embodiments of this application.

The node 800 includes at least one processor 801, a memory 803, and at least one network interface 804.

The processor 801 is, for example, a general-purpose CPU, a digital signal processor (digital signal processor, DSP), a network processor (network processor, NP), a GPU, a neural network processing unit (neural network processing unit, NPU), a data processing unit (data processing unit, DPU), a microprocessor or one or more integrated circuits or application-specific integrated circuits (application-specific integrated circuits, ASICs) configured to implement the solutions of this application, a programmable logic device (programmable logic device, PLD) or another programmable logic device, a transistor logic device, a hardware component, or any combination thereof. The PLD may be a complex programmable logic device (complex programmable logic device, CPLD), a field programmable logic gate array (field programmable gate array, FPGA), generic array logic (generic array logic, GAL), or any combination thereof. The processor may implement or execute various logical blocks, modules, and circuits described with reference to content disclosed in this application. The processor may alternatively be a combination for implementing a computing function, for example, a combination including one or more microprocessors, or a combination of a DSP and a microprocessor.

Optionally, the node 800 further includes a bus 802. The bus 802 is configured for information transmission between components of the node 800. The bus 802 may be a peripheral component interconnect (peripheral component interconnect, PCI for short) bus, an extended industry standard architecture (extended industry standard architecture, EISA for short) bus, or the like. The bus 802 may be classified as an address bus, a data bus, a control bus, or the like. For ease of representation, only one thick line is for representing the bus in FIG. 8, but this does not mean that there is only one bus or only one type of bus.

The memory 803 is, for example, a read-only memory (read-only memory, ROM) or another type of storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited thereto. For example, the memory 803 exists independently, and is connected to the processor 801 through the bus 802. Alternatively, the memory 803 and the processor 801 may be integrated together.

The network interface 804 is an apparatus like a transceiver and is configured to communicate with another device or a communication network. The communication network may be an Ethernet, a radio access network (radio access network, RAN), a wireless local area network (wireless local area network, WLAN), or the like. The network interface 804 may include a wired network interface, and may further include a wireless network interface. Specifically, the network interface 804 may be an Ethernet (Ethernet) interface, like a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network interface, or a combination thereof. The Ethernet interface may be an optical interface, an electrical interface, or a combination thereof. In some implementations of this application, the network interface 804 may be used by the node 800 to communicate with another device.

In a specific implementation, in some implementations, the processor 801 may include one or more CPUs. Each of the processors may be a single-core processor or a multi-core processor. The processor herein may be one or more devices, circuits, and/or processing cores configured to process data (for example, computer program instructions).

In a specific implementation, in some implementations, the node 800 may include a plurality of processors. Each of the processors may be a single-core processor or a multi-core processor. The processor herein may be one or more devices, circuits, and/or processing cores configured to process data (for example, computer program instructions).

In some implementations, the memory 803 is configured to store program instructions for executing the solutions in this application, and the processor 801 may execute the program instructions stored in the memory 803. In other words, the node 800 may implement the method provided in method embodiments shown in the foregoing embodiments by using the processor 801 and the program instructions in the memory 803. The program instructions may include one or more software modules. Optionally, the processor 801 may also store program instructions for executing the solutions in this application.

In a specific implementation process, the processor 801 in the node 800 in this application reads the instructions in the memory 803, to enable the node 800 shown in FIG. 8 to perform all or some of steps of the cross-node data transmission method performed by the node in the foregoing embodiments.

The steps in the method described in the foregoing embodiments are completed by using an integrated logic circuit of hardware in the processor of the node 800 or instructions in a software form. The steps in method embodiments disclosed with reference to this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and completes the steps in the foregoing method embodiments in combination with hardware of the processor. To avoid repetition, details are not described herein again.

It should be understood that, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of an example but not limitative descriptions, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a decentralized network, including at least three nodes. The nodes can perform steps of the cross-node data transmission method performed by any node provided in embodiments of this application. The nodes can perform steps of cross-node data transmission method performed by any node provided in embodiments of this application.

In an example embodiment, an embodiment of this application provides a computer program (product). The computer program (product) includes computer program code. When the computer program code is run by a computer, the computer is enabled to perform steps of the cross-node data transmission method performed by any node provided in embodiments of this application.

In an example embodiment, an embodiment of this application provides a computer-readable storage medium. The computer-readable storage medium stores a program or instructions. When the program or the instructions are run on a computer, the cross-node data transmission method performed by any node provided in embodiments of this application is performed.

In an example embodiment, an embodiment of this application provides a chip. The chip includes a processor, configured to invoke and run instructions stored in a memory, to enable a communication device on which the chip is installed to perform the cross-node data transmission method performed by any node provided in embodiments of this application.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on the computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk)), or the like.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use the terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

A term "at least one" in this application means one or more, and a term "a plurality of" in this application means two or more. For example, a plurality of second devices means two or more second devices. Terms "system" and "network" may often be used interchangeably in this specification.

It should be understood that the terms used in the descriptions of the various examples in this specification are merely intended to describe specific examples and are not intended to impose a limitation. As used in the descriptions of the various examples and in the appended claims, singular forms "one ("a" or "an")" and "the" are intended to also include a plural form, unless otherwise explicitly indicated in the context.

It should be further understood that a term "and/or" used in this specification indicates and includes any combination and all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, a character "/" in this application generally indicates an "or" relationship between the associated objects.

It should be further understood that a term "if" or "on condition that" may be interpreted as a meaning of "when" ("when" or "upon"), "in response to determining", or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely embodiments of this application, but are not intended to limit this application. Any modification, equivalent replacement, improvement, or the like made without departing from the principle of this application should fall within the protection scope of this application.

Finally, it should be noted that, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cross-node data transmission method, applied to a relay node in a decentralized network, wherein the decentralized network comprises at least three nodes comprising the relay node and at least two adjacent nodes of the relay node, and the method comprises:
after the relay node completes neighbor discovery with an adjacent node, receiving, by the relay node, a route flooding message sent by the adjacent node, wherein the route flooding message carries unidirectional node authentication information and challenge information;
performing, by the relay node, authentication on the route flooding message based on the unidirectional node authentication information, to obtain an authentication result;
if the authentication result is that the route flooding message is sent by the adjacent node, establishing, by the relay node, a correspondence between the adjacent node and the challenge information;
receiving, by the relay node, a data packet sent by the adjacent node, wherein the data packet carries challenge response information corresponding to the adjacent node;
determining, by the relay node based on the correspondence, challenge information corresponding to the adjacent node;
verifying, by the relay node, the challenge response information based on the challenge information, to obtain a verification result;
if the verification result is that the challenge information matches the challenge response information, and it is determined that the data packet is sent by the adjacent node, obtaining, by the relay node, challenge response information corresponding to the relay node;
updating, by the relay node, the data packet based on the challenge response information corresponding to the relay node, to obtain a forwarding packet, wherein the forwarding packet carries the challenge response information corresponding to the relay node; and
sending, by the relay node, the forwarding packet to an adjacent node corresponding to a next hop.

2. The method according to claim 1, wherein the unidirectional authentication information comprises signature information corresponding to the route flooding message, and performing, by the relay node, identity authentication on the route flooding message based on the unidirectional node authentication information, to obtain the authentication result comprises:
obtaining, by the relay node, a public key of the adjacent node; and
verifying, by the relay node, the signature information based on the public key, to obtain the authentication result.

3. The method according to claim 1 or 2, wherein the challenge information comprises a challenge random value, and the challenge response message comprises a response random value; and
verifying, by the relay node, the challenge response information based on the challenge information, to obtain the verification result comprises:
if the challenge random value is equal to the response random value, determining, by the relay node, that the data packet is sent by the adjacent node; or
if the challenge random value is not equal to the response random value, determining, by the relay node, that the data packet is not sent by the adjacent node.

4. The method according to claim 1 or 2, wherein the challenge information comprises a key agreement parameter corresponding to the adjacent node, and the challenge response information comprises a response information verification code; and
verifying, by the relay node, the challenge response information based on the challenge information, to obtain the verification result comprises:
determining, by the relay node, a challenge information verification code based on the key agreement parameter; and
if the challenge information verification code is equal to the response information verification code, determining, by the relay node, that the challenge information matches the challenge response information, and determining that the data packet is sent by the adjacent node; or
if the challenge information verification code is not equal to the response information verification code, determining, by the relay node, that the challenge information does not match the challenge response information, and determining that the data packet is not sent by the adjacent node.

5. The method according to claim 1 or 2, wherein the challenge information comprises a challenge random value and a key agreement parameter corresponding to the adjacent node, and the challenge response message comprises a response random value and a response information verification code; and
verifying, by the relay node, the challenge response information based on the challenge information, to obtain the verification result comprises:
determining, by the relay node, a challenge information verification code based on the key agreement parameter; and
if the challenge random value is equal to the response random value, and the challenge information verification code is equal to the response information verification code, determining, by the relay node, that the data packet is sent by the adjacent node; or
if the challenge random value is not equal to the response random value, and/or the challenge information verification code is not equal to the response information verification code, determining, by the relay node, that the data packet is not sent by the adjacent node.

6. The method according to claim 3 or 5, wherein the challenge information further comprises validity time of the challenge random value; and
before verifying, by the relay node, the challenge response information based on the challenge information, the method further comprises:
if it is determined, based on the validity time, that the challenge random value is within the validity time, verifying, by the relay node, the challenge response information based on the challenge information.

7. The method according to any one of claims 1 to 6, wherein the route flooding message further carries a timestamp, and the timestamp indicates time corresponding to the route flooding message.

8. The method according to any one of claims 1 to 7, wherein the data packet carries mutual authentication information, and the adjacent node performs mutual authentication with a destination node of the data packet by using the mutual authentication information.

9. A cross-node data transmission method, applied to a sending node in a decentralized network, wherein the decentralized network comprises at least three nodes comprising the sending node and at least one adjacent node of the sending node, and the method comprises:
after the sending node completes neighbor discovery with an adjacent node, sending, by the sending node, a route flooding message to the adjacent node, wherein the route flooding message carries unidirectional node authentication information and challenge information, for the adjacent node to perform, based on the unidirectional node authentication information, authentication on the route flooding message sent by the adjacent node, to obtain an authentication result; and when the authentication result is that the route flooding message is sent by the sending node, establishing, by the adjacent node, a correspondence between the sending node and the challenge information; and
sending, by the sending node, a data packet to the adjacent node, wherein the data packet carries challenge response information corresponding to the sending node, the sending node is a source node of the data packet, and the adjacent node is not a destination node of the data packet, and the adjacent node determines, based on the correspondence, challenge information corresponding to the sending node; verifying, by the adjacent node, the challenge response information based on the challenge information, to obtain a verification result; if the verification result is that the adjacent node determines that the data packet is sent by the sending node, obtaining, by the adjacent node, challenge response information corresponding to the adjacent node; updating, by the adjacent node, the data packet based on the challenge response information corresponding to the sending node, to obtain a forwarding packet, wherein the forwarding packet carries the challenge response information corresponding to the adjacent node; and sending, by the adjacent node, the forwarding packet to a next-hop node.

10. The method according to claim 9, wherein the unidirectional authentication information comprises signature information corresponding to the route flooding message.

11. The method according to claim 9 or 10, wherein the challenge information comprises a challenge random value, and the challenge response message comprises at least one of a response random value and a key agreement parameter.

12. The method according to any one of claims 9 to 11, wherein the data packet further carries mutual authentication information, and the sending node performs mutual authentication with the destination node of the data packet by using the mutual authentication information.

13. A cross-node data transmission method, applied to a receiving node in a decentralized network, wherein the decentralized network comprises at least three nodes comprising the receiving node and at least one adjacent node of the receiving node, and the method comprises:
after the receiving node completes neighbor discovery with an adjacent node, receiving, by the receiving node, a route flooding message sent by the adjacent node, wherein the route flooding message carries unidirectional node authentication information and challenge information;
performing, by the receiving node, authentication on the route flooding message based on the unidirectional node authentication information, to obtain an authentication result;
if the authentication result is that the route flooding message is sent by the adjacent node, establishing, by the receiving node, a correspondence between the adj acent node and the challenge information;
receiving, by the receiving node, a forwarding packet sent by the adjacent node, wherein the forwarding packet carries challenge response information corresponding to the adjacent node, the receiving node is a destination node of the forwarding packet, and the adjacent node is not a source node of the forwarding packet;
determining, by the receiving node based on the correspondence, challenge information corresponding to the adjacent node;
verifying, by the receiving node, the challenge response information based on the challenge information, to obtain a verification result; and
if the verification result is that the challenge information matches the challenge response information, and it is determined that the forwarding packet is sent by the adjacent node, parsing, by the receiving node, payload information of the forwarding packet.

14. The method according to claim 13, wherein the unidirectional authentication information comprises signature information corresponding to the route flooding message, and performing, by the receiving node, identity authentication on the route flooding message based on the unidirectional node authentication information, to obtain the authentication result comprises:
obtaining, by the receiving node, a public key of the adjacent node; and
verifying, by the receiving node, the signature information based on the public key, to obtain the authentication result.

15. The method according to claim 13 or 14, wherein the challenge information comprises a challenge random value, and the challenge response message comprises a response random value; and
verifying, by the receiving node, the challenge response information based on the challenge information, to obtain the verification result comprises:
if the challenge random value is equal to the response random value, and the challenge information matches the challenge response information, determining that the data packet is sent by the adjacent node; or
if the challenge random value is not equal to the response random value, and the challenge information does not match the challenge response information, determining that the data packet is not sent by the adjacent node.

16. The method according to claim 13 or 14, wherein the challenge information comprises a key agreement parameter corresponding to the adjacent node, and the challenge response information comprises a response information verification code; and
verifying, by the receiving node, the challenge response information based on the challenge information, to obtain the verification result comprises:
determining, by the receiving node, a challenge information verification code based on the key agreement parameter; and
if the challenge information verification code is equal to the response information verification code, determining, by the receiving node, that the data packet is sent by the adjacent node; or
if the challenge information verification code is not equal to the response information verification code, determining, by the receiving node, that the data packet is not sent by the adjacent node.

17. The method according to claim 13 or 14, wherein the challenge information comprises a challenge random value and a key agreement parameter corresponding to the adjacent node, and the challenge response message comprises a response random value and a response information verification code; and
verifying, by the receiving node, the challenge response information based on the challenge information, to obtain the verification result comprises:
determining a challenge information verification code based on the key agreement parameter; and
if the challenge random value is equal to the response random value, and the challenge information verification code is equal to the response information verification code, determining, by the receiving node, that the data packet is sent by the adjacent node; or
if the challenge random value is not equal to the response random value, and/or the challenge information verification code is not equal to the response information verification code, determining, by the receiving node, that the data packet is not sent by the adjacent node.

18. The method according to claim 15 or 17, wherein the challenge information further comprises validity time of the challenge random value; and
before verifying, by the receiving node, the challenge response information based on the challenge information, the method further comprises:
if it is determined, based on the validity time, that the challenge random value is within the validity time, verifying, by the receiving node, the challenge response information based on the challenge information.

19. The method according to any one of claims 13 to 18, wherein the route flooding message further carries a timestamp, and the timestamp indicates time corresponding to the route flooding message.

20. The method according to any one of claims 13 to 19, wherein the payload information comprises mutual authentication information, and the receiving node performs mutual authentication with a source node of the data packet by using the mutual authentication information.

21. A node, comprising:
a memory, wherein the memory comprises computer-readable instructions; and
a processor communicating with the memory, wherein the processor is configured to execute the computer-readable instructions, to enable the node to perform the cross-node data transmission method according to any one of claims 1 to 8, the cross-node data transmission method according to any one of claims 9 to 12, or the cross-node data transmission method according to any one of claims 13 to 20.

22. A computer-readable storage medium, comprising a program or instructions, wherein when the computer program or the instructions are executed by a processor, the cross-node data transmission method according to any one of claims 1 to 8, the cross-node data transmission method according to any one of claims 9 to 12, or the cross-node data transmission method according to any one of claims 13 to 20 is implemented.
